# EUROPÄISCHE PATENTANMELDUNG

(11) **EP 1 876 432 A1**
(43) Veröffentlichungstag der Anmeldung: **09.01.2008**
(21) Anmeldenummer: 06123692.3
(22) Anmeldetag: 08.11.2006
(51) Int. Cl.: G01G 21/18, G01G 21/23

(54) **Wägemodul**

(30) Priorität: 07.07.2006 US 482155
(71) Anmelder: Mettler-Toledo GmbH, 8606 Greifensee (CH)
(72) Erfinder: Leahy, Tom, 82100, Castelsarrasin (FR); Queen, Gregory A., Pickerington, OH 43147 (US); Bäumel, Helmut, 8606, Greifensee (CH)

(57) **Zusammenfassung**

Wägemodul mit einer ersten Montageinrichtung (1), welche in Kraftkontakt mit einer zu bestimmenden Last (30) steht, einer zweiten Montageinrichtung (2), welche mit einer das Wägemodul tragenden Struktur (34) verbindbar ist, und einer zwischen den Montageeinrichtungen (1, 2) angeordneten Wägezelle, dadurch gekennzeichnet, dass mindestens eine Montageinrichtung (1, 2) derart ausgestaltet ist, dass sie ein Mittel zur thermischen Isolation darstellt, welches die Wägezelle (3) gegenüber der Last (30) und/oder der tragenden Struktur (34) thermisch isoliert.

## Beschreibung

Die Erfindung betrifft ein Wägemodul für eine darin anzuordnende Wägezelle.

Wägemodule können in Abhängigkeit des verwendeten Wägezellen-Typs und des gewünschten Lastbereichs in unterschiedlichen Gebieten eingesetzt werden. Wägemodule mit Hochlastwägezellen werden vor allem zur Bestimmung des Gewichts und zur Wägung der Inhalte von grossvolumigen Behältern, Silos, Tanks, Reaktionsgefässen und/oder Reaktionsgebinden verwendet. Die Wägung des Inhalts erfolgt im Allgemeinen über eine Differenzwägung zwischen dem leeren und dem gefüllten Behälter. Derartige Wägemodule können auch unter extremen Aussenbedingungen eingesetzt werden, wie beispielsweise im Freien, in einer technischen Anlage oder in einer Produktionsanlage.

Kommerziell erhältlich sind u. a. die Wägemodule "Centerlign" und "Flexmount" von Mettler Toledo. Centerlign weist eine selbstzentrierende, hermetisch verschlossene Hochlastwägezelle in Form einer Rocker-Pin-Wägezelle auf. Flexmount stellt ein Wägemodul mit eine balkenförmigen Wägezelle und einer Überlastsicherung dar. Die Wägezelle ist in der Regel zwischen zwei Montageeinrichtungen angeordnet, welche zur Montage des Wägemoduls zwischen einer Last und einer tragenden Struktur ausgelegt sind. Balkenförmige Wägezelle sind Wägezelle mit einer länglichen Form, deren eines Ende im Allgemeinen fest mit dem Wägemodul verbunden und deren anderes Ende auslenkbar angeordnet ist.

Ein Wägemodul mit einer balkenförmigen Wägezelle wird beispielsweise in der EP 1 275 943 A2 offenbart, wobei die Wägezelle mit einem stift- oder kugelförmigen Kraftübertragungselement zusammenwirkt.

Die bekannten Wägemodule sind vor allem gegen mechanische Beschädigungen des Wägemoduls und/oder der Wägezelle geschützt. Sie weisen unter anderem Abhebsicherungen und/oder Überlastsicherungen auf, welche ein Abreissen einer Montageeinrichtung und/oder eine Zerstörung der Wägezelle, wie zum Beispiel durch das Einwirken einer schweren Last, verhindern soll. Weiterhin sind verschiedene Mittel zur Ausrichtung und/oder Begrenzung des Spiels des Wägemoduls und insbesondere der Montageeinrichtungen in Relation zur Wägezelle und zueinander bekannt.

Neben einer fehlerhaften Ausrichtung des Wägemoduls können auch andere Faktoren das Wägeergebnis beeinflussen. Zu diesen Faktoren zählen Temperaturschwankungen, die Einwirkung von Feuchtigkeit sowie die Ausrichtung mehrerer Wägemodule zueinander, wenn eine Last mit mehreren Wägemodulen bestimmt werden soll. Temperaturschwankungen sowie Feuchtigkeit beeinflussen nicht nur das Wägemodul als Ganzes sondern vor allem die Wägezelle.

Insbesondere beim Einsatz von Wägemodulen in technischen Anlagen oder unter extremen Aussenbedingungen können zum Beispiel Regen, Kondenswasser oder sogar aggressive Flüssigkeiten das Wägemodul und insbesondere die Wägezelle benetzen, so dass deren Funktionalität eingeschränkt wird oder diese von der Flüssigkeit angegriffen wird. Temperaturschwankungen können bereits aufgrund eines nicht ausreichend klimatisierten Raumes bzw. im Freien durch tages- und jahreszeitlich bedingte Temperaturänderungen auftreten. Zudem können Temperaturänderungen auch aufgrund des Erwärmens oder des Abkühlens der zu bestimmenden Last auftreten, dies kann vor allem im Zusammenhang mit der Wägung von Reaktionsbehältern und Produktionsanlagen von Bedeutung sein, deren Inhalte erhitzt und/oder abgekühlt werden oder in denen eine chemische und/oder physikalische Reaktion abläuft.

Zur thermischen Isolation werden, wenn ein Wägemodul überhaupt thermisch isoliert wird, vor allem Dämmmatten eingesetzt. Diese Dämmmatten werden können zwischen dem Wägemodul und der zu bestimmenden Last oder der tragenden Struktur angeordnet werden, beispielsweise zwischen einer Montageeinrichtung und einem mit dieser verbundenen Befestigungseinrichtung, zum Beispiel ein Fuss eines zu wägenden Behälters. Die Dämmmatten bestehen in der Regel aus einem Material mit geringer Wärmeleitfähigkeit, wie beispielsweise verschiedene Kunststoffe. Nachteilig am Einsatz solcher Dämmmatten ist vor allem, dass sie aufgrund ihrer Dicke die Bauhöhe des Wägemoduls zusätzlich erhöhen und sich zudem mit der Zeit abnutzen, altern und/oder verschieben können, so dass die Dämmwirkung unkontrollierbar nachlassen kann. Gegebenenfalls müssen die Dämmmatten sogar im Betrieb ausgetauscht werden, was insbesondere in technischen Anlagen sowie bei Wägemodulen für Hochlastanwendungen sehr aufwändig und kostenintensiv sein kann.

Daraus ergibt sich die Aufgabe der Entwicklung eines verbesserten Wägemoduls, welche die bekannten Nachteile überwindet.

Ein Wägemodul für eine darin anzuordnende Wägezelle weist eine erste und eine zweite Montageinrichtung auf. Die erste Montageeinrichtung steht in Kraftkontakt mit einer zu bestimmenden Last, beispielsweise einem zu wägenden Behälter, und die zweite Montageeinrichtung ist mit einer das Wägemodul tragenden Struktur verbindbar. Die tragende Struktur kann beispielsweise der Boden einer Fabrikhalle, der Erdboden, ein Gerüst oder auch ein Tisch sein, je nach dem für welche Lasten das Wägemodul ausgelegt ist und welche Aufgaben es erfüllen soll. Die Wägezelle ist zwischen den beiden Montageeinrichtungen angeordnet, wobei es sich für den Transport und/oder die Montage anbietet zum Schutz der Wägezelle, die Wägezelle gegen einen Wägezellen-Dummy auszutauschen.

Mindestens eine Montageeinrichtung ist derart ausgestaltet, dass sie ein Mittel zur thermischen Isolation darstellt, welches das Wägemodul und insbesondere die Wägezelle gegenüber der Last und/oder der tragenden Struktur thermisch isoliert. Die Mittel zur thermischen Isolation können unterschiedliche Ausgestaltungen der Montageeinrichtung umfassen.

Eine erste Ausgestaltung umfasst die Ausbildung mindestens einer flächigen Vertiefung in der Kontaktfläche der Montageeinrichtung zur Last oder zur tragenden Struktur. Nach Einbau des Wägemoduls stellt jede Vertiefung einen Hohlraum dar, welcher im einfachsten Fall mit Luft gefüllt ist. Der Hohlraum wird auf einer Seite durch die Montageeinrichtung selbst und auf der anderen Seite durch eine Befestigungseinrichtung begrenzt, welche einen Teil der Last oder der tragenden Struktur darstellt. Auf diese Art wird ein stehendes Luftpolster mit sehr guten Isolatoreigenschaften bereitgestellt.

In Abhängigkeit des Lastbereichs, der Grösse und der erforderten strukturellen Stabilität des Wägemoduls können die erste und/oder die zweite Montageeinrichtung eine einzelne oder auch mehrere Vertiefungen aufweisen, welche durch Materialstege und/oder Abstützungen begrenzt werden. Die nach dem Verbinden des Wägemoduls mit der tragenden Struktur und/oder der Last entstehenden Hohlräume können entweder mit Luft oder mit einer anderen Substanz gefüllt sein, welche ein guter Isolator ist, oder im Hohlraum kann ein Vakuum erzeugt werden. Die Erzeugung eines Vakuums ist nur möglich, wenn der Hohlraum durch eine geeignete Abdeckung gasdicht verschlossen werden kann.

Eine weitere Ausgestaltung des Mittels zur thermischen Isolation stellt die Bereitstellung von mindestens einer in Lastrichtung angeordneten Durchführung in der ersten und/oder der zweiten Montageeinrichtung dar. Die Durchführung kann beispielsweise eine einfache Bohrung sein, welche dazu dient die Kontaktfläche zwischen einer Montageeinrichtung und der Last und/oder der tragenden Struktur zu verringern. Eine reduzierte Kontaktfläche bedingt eine Verbesserung der Isolation. Die Montageeinrichtung kann zumindest teilweise als eine Art Kühlrippe ausgestaltet sein, wodurch ein Temperaturausgleich zwischen dem Wägemodul und der Raumtemperatur auf Grund von vorbeiströmender Luft ermöglicht wird. Weiterhin kann die Montageeinrichtung ein eng- oder grobmaschiges Gitter darstellen, wodurch ebenfalls die Kontaktfläche zwischen Montageeinrichtung und Last oder tragender Struktur reduziert wird.

Eine weitere Ausgestaltung umfasst eine Montageeinrichtung mit mindestens einer vertikal zur Lastrichtung angeordneten Durchführung. Vertikal zur Lastrichtung angeordnete Durchführungen können eine Art Rohrsystem darstellen, welches beispielsweise mit einem Isolator gefüllt und nach aussen verschlossen und/oder offen sein kann, so dass zum Beispiel Luft oder ein anderes Temperiermittel hindurchgeleitet werden kann.

Vorzugsweise weist zumindest die erste oder die zweite Montageeinrichtung mindestens ein Mittel zur thermischen Isolation auf, wobei auch beide Montageeinrichtungen mit solchen Mitteln ausgestaltet sein können. Das Wägemodul und insbesondere die Wägezelle können auf diese Weise gegen thermische Einflüsse geschützt werden, welche von der Last und/oder der tragende Struktur auf das Wägemodul übertragen werden

In einem weiteren Ausführungsbeispiel weist das Wägemodul mindestens eine Drainage auf, welche dazu dient Flüssigkeiten und vor allem Feuchtigkeit vom Wägemodul abzuleiten. Vorzugsweise ist zumindest die mit der tragenden Struktur verbundene Montageeinrichtung als Drainage ausgestaltet, indem ihre der Wägezelle zugewandten Fläche zu den Aussenkanten hin abfallend ausgestaltet ist, so dass Feuchtigkeit und Flüssigkeiten nach aussen, also vom Wägemodul weg, abgeleitet werden.

In einem weiteren Ausführungsbeispiel weist eine Montageeinrichtung, vorzugsweise die mit der tragenden Struktur verbundene Montageeinrichtung, eine Einbauhilfe für die Wägezelle auf. Die Einbauhilfe ist vorzugsweise kanalförmig ausgebildet, wobei der Kanal zu einer Aussenkante der Montageinrichtung hin abfallend ausgestaltet ist, so das eine Wägezelle nach Verbindung der Montageeinrichtungen mit der tragenden Struktur und der Last leicht in das Wägemodul eingebaut, aus diesem ausgebaut und/oder ausgetauscht werden kann.

Ein Wägemodul kann je nach Ausgestaltung unterschiedliche Typen von Wägezellen mit unterschiedlichen Lastbereichen aufnehmen. Vorzugsweise weisen die einsetzbaren Wägezellen einen mit Dehnmessstreifen versehenen, elastischen Verformungskörper auf und können sowohl als "single ended beam" Wägezelle oder auch als Rocker-Pin-Wägezelle ausgestaltet sein.

In einem erfindungsgemässen Wägemodul wirkt die Wägezelle mit einem Kraftübertragungselement zusammen, welches in einer bevorzugten Ausführungsform kugelförmig ist. Das Kraftübertragungselement stellt den Kraftkontakt zwischen der ersten Montageeinrichtung und der Wägezelle dar. Diese Ausführungsform ist insbesondere geeignet, wenn das Wägemodul für eine balkenförmige Wägezelle ausgestaltet ist.

Zusätzlich kann ein Wägemodul zur Stabilisierung einer balkenförmigen Wägezelle seitliche Anschläge aufweisen.

In einer weiteren bevorzugten Ausgestaltung bilden die Wägezelle und das Kraftübertragungselement eine Einheit, welche zwei konvexe Zylinderendflächen mit gleicher oder unterschiedlicher Geometrie aufweist. Ein Beispiel für eine solche Einheit stellt eine bekannte Rocker-Pin-Wägezelle dar. Ein derartiges Wägemodul hat keine bevorzugte Einbaurichtung, so dass entweder die eine oder die andere Montageeinrichtung mit der Last verbunden werden kann.

Es ist vorteilhaft, wenn die Beweglichkeit der Wägemodule einfach eingeschränkt und/oder verändert werden kann, insbesondere, wenn mehrere Wägemodule zur Wägung einer Last eingesetzt werden, damit die Wägemodule in der Lage sind, einwirkende Störkräfte ohne eine Beeinträchtigung der Funktion, sowie ohne ein Verkippen der Last aufzunehmen. In Abhängigkeit der Form der zu bestimmenden Last oder des Behälters werden insbesondere in Wägemodulanordnungen Module mit unterschiedlichen Graden der Beweglichkeit kombiniert. Im Allgemeinen wird ein spielfreies Modul als Anker- oder Fixpunkt zusammen mit mindestens zwei beweglichen und/oder eingeschränkt beweglichen Modulen eingesetzt.

In einer vorteilhaften Ausgestaltung wird eine Wägemodulanordnung mit mindestens drei Wägemodule zur Bestimmung der Masse oder einer von der Masse ableitbaren physikalischen Grösse einer Last eingesetzt, beispielsweise eines Behälters und/oder dessen Inhalts, wobei die Last mit den mindestens drei Wägemodulen fest verbunden ist.

Verschiedene Ausführungsbeispiele werden im Folgenden anhand der Figuren beschrieben, wobei gleiche Merkmale sind gleiche Bezugszeichen aufweisen. Die Figuren zeigen:
- Fig. 1: Eine vereinfachte dreidimensionale Ansicht eines Wägemoduls mit einem Mittel zur thermischen Isolation;
- Fig. 2: Ansicht A des Wägemoduls aus Fig. 1 als vereinfachte Seitenansicht;
- Fig. 3: eine vereinfachte Seitenansicht (Ansicht B, s. Figur 1) einer ersten mit einer Befestigungseinrichtung verbundenen Montageeinrichtung mit einem Mittel zur thermischen Isolation;
- Fig. 4: eine vereinfachte Seitenansicht (Ansicht B, s. Figur 1) einer zweiten mit einer Befestigungseinrichtung verbundenen Montageeinrichtung;
- Fig. 5: eine vereinfachte Aufsicht auf eine zweite Montageeinrichtung eines Wägemoduls;
- Fig. 6: eine vereinfachte Seitenansicht eines Wägemoduls mit einer Rocker-Pin-Wägezelle im Schnitt;
- Fig. 7: eine Montageeinrichtung mit einer flächigen Vertiefung als Mittel zur thermischen Isolation in einer vereinfachte Aufsicht und im Schnitt;
- Fig. 8: eine Montageeinrichtung mit einer flächigen Vertiefung und Kühlrippen als Mittel zur thermischen Isolation im Schnitt;
- Fig. 9: eine Montageeinrichtung mit vertikal zur Lastrichtung angeordneten Durchführungen von zwei Seiten im Schnitt;
- Fig. 10: Aufsicht auf eine Montageeinrichtung mit mehreren Vertiefungen oder in Lastrichtung angeordneten Durchführungen;
- Fig. 11: Aufsicht auf eine Montageeinrichtung mit einer Vertiefung und mehreren in Lastrichtung angeordneten Abstützungen;
- Fig.12a: eine schematische Aufsicht auf eine radial ausgerichtete Wägemodulanordnung mit vier Wägemodulen;
- Fig. 12b: eine schematische Aufsicht auf eine tangential ausgerichtete Wägemodulanordnung mit drei Wägemodulen;
- Fig. 12c: eine schematische Aufsicht auf eine Wägemodulanordnung für einen rechteckigen Behälter mit vier Wägemodulen;

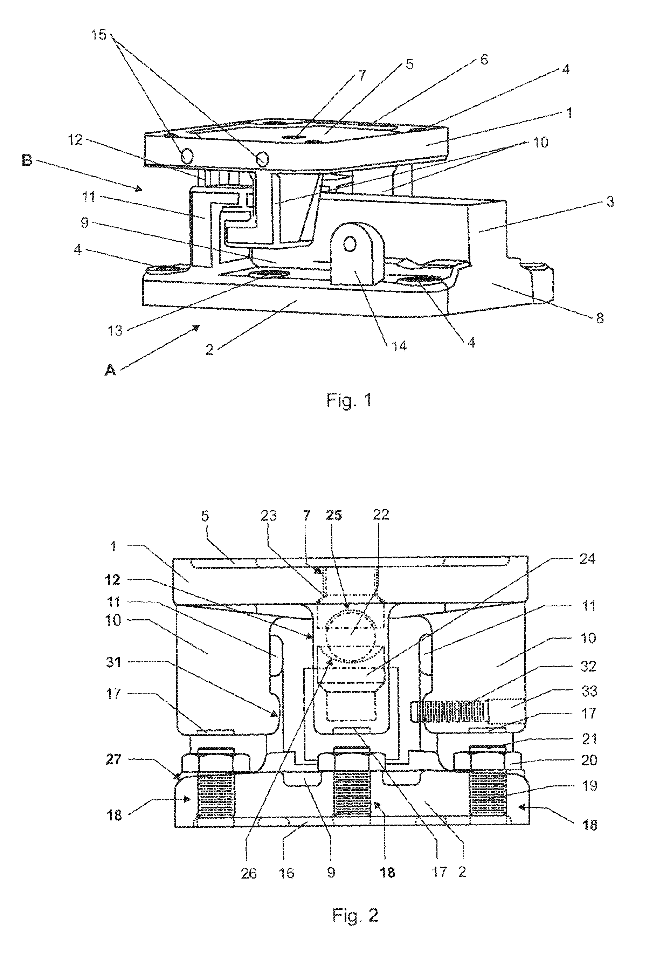

Figur 1 zeigt eine vereinfachte dreidimensionale Ansicht eines erfindungsgemässen Wägemoduls. Das Wägemodul besteht aus zwei im Wesentlichen plattenförmigen Montageeinrichtungen 1, 2 und einer zwischen den Montageeinrichtungen 1,2 angeordneten balkenförmigen Wägezelle 3. Die Wägezelle 3 kann eine beliebige balkenförmige Wägezelle oder ein Wägezellen-Dummy sein. Der Einsatz eines Dummys ist vor allem während des Transports und/oder der Montage des Wägemoduls vorteilhaft. Im Betrieb ist das Wägemodul vorzugsweise so ausgerichtet, dass die erste Montageeinrichtung 1 mit einer zu bestimmenden Last in Kraftkontakt steht und die zweite Montageeinrichtung 2 mit einer tragenden Struktur verbunden ist.

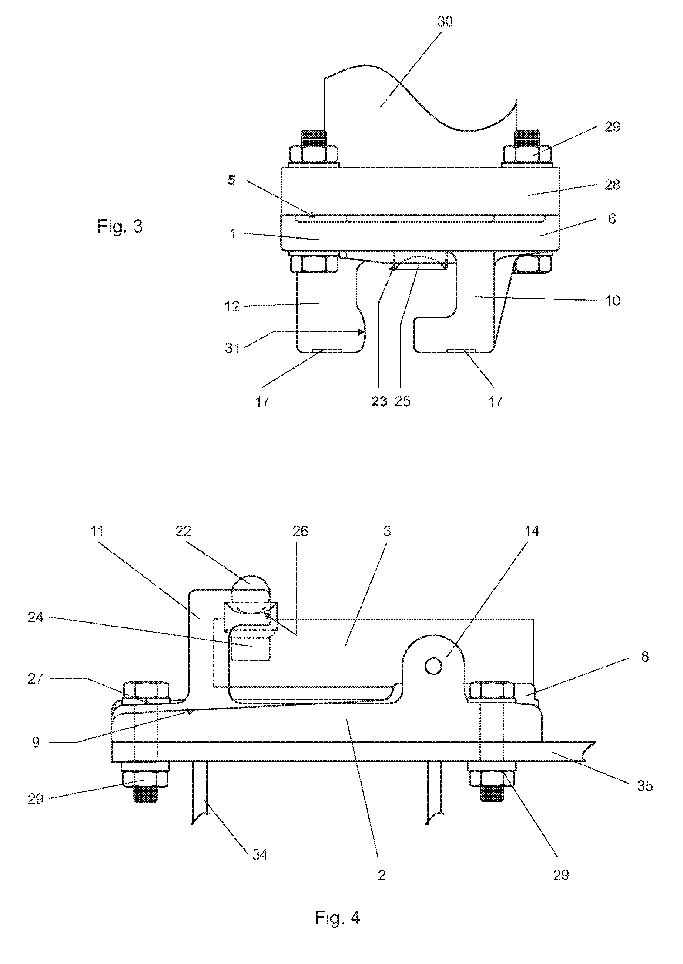

Zur Befestigung des Wägemoduls an der Last und/oder der tragenden Struktur weisen die Montageeinrichtungen 1, 2 an jeder Ecke eine Durchführung 4 für ein geeignetes Befestigungsmittel auf. Eine mit einer Last in Kraftkontakt stehende Montageeinrichtung 1 ist in Figur 3 gezeigt und eine mit einer tragenden Struktur verbundene Montageeinrichtung 2 ist in Figur 4 gezeigt.

Auf ihrer von der Wägezelle abgewandten Seite weist die Montageeinrichtung 1 eine einzelne flächige Vertiefung 5 auf, welche sich nahezu über die gesamte Oberfläche der Montageeinrichtung 1 erstreckt. Die Vertiefung 5 wird durch einen umlaufenden Materialsteg 6 begrenzt, dessen Oberfläche die Kontaktfläche zu einer Befestigungseinrichtung für die Last darstellt.

Etwa in der Mitte der Vertiefung 5 ist eine weitere Durchführung 7 vorhanden, welche zur Befestigung einer Aufnahmeschale für ein mit der Wägezelle 3 in Kraftkontakt stehendes Kraftübertragungsmittel dient (s. a. Figuren 2 und 3). Die Position der Durchführung 7 hängt vor allem von der Ausrichtung und Anordnung der Wägezelle 3 im Wägemodul ab.

Die zweite Montageeinrichtung 2 wird im Betrieb mit einer tragenden Struktur verbunden und weist ebenfalls an jeder Ecke eine Durchführung 4 für ein geeignetes Befestigungsmittel auf.

Auf der der Wägezelle 3 zugewandten Seite der Montageeinrichtung 2 ist ein Sockel 8 angeordnet, auf dem die Wägezelle 3 befestigt wird. Die Wägezelle 3 ist derart ausgerichtet, dass ein Ende fest mit dem Sockel 8 verbunden ist. Das andere Ende ist in Lastrichtung auslenkbar und mit einem bestimmten Abstand zur Montageeinrichtung 2 angeordnet, welcher einerseits durch die Höhe des Sockels 8 und andererseits durch die Tiefe einer Einbauhilfe 9 bedingt wird. Die Einbauhilfe 9 ist in der Montageeinrichtung 2 als kanalartige Vertiefung und vom Sockel 8 zur diesem gegenüberliegenden Kante der Montageeinrichtung 2 hin abfallend ausgestaltet. Dadurch wird der Einbau oder Austausch der Wägezelle 3 in ein montiertes Wägemodul erleichtert.

Im Betrieb stellt nur das Kraftübertragungselement (hier nicht zu sehen) den Kraftkontakt zwischen den beiden Montageeinrichtung 1, 2 her. Zur Begrenzung des horizontalen und vertikalen Spiels der Montageeinrichtungen 1, 2 zueinander weist das Wägemodul verschiedene Sicherungsmerkmale auf.

Zwischen den beiden Montageeinrichtungen 1, 2 ist ein mehrteiliges Abhebelement angeordnet, welches hier aus ineinandergreifenden hakenförmigen Mitteln 10, 11 besteht. Zwei Haken 10 sind mit der ersten Montageeinrichtung 1 und zwei weitere Haken 11 sind mit der zweiten Montageeinrichtung 2 verbunden. Die Haken 10, 11 greifen jeweils paarweise ineinander und die Wägezelle 3 ist zwischen den beiden Haken-Paaren 10, 11 die angeordnet.

Als weiteres Sicherheitsmerkmal weist das Wägemodul eine mit der ersten Montageeinrichtung 1 verbundene Überlastsicherung 12 auf, welche in den Figuren 2 und 3 besser zu erkennen ist. Die die Überlastsicherung 12 und die Haken-Paare 10, 11 begrenzen das horizontale Spiel der Montageeinrichtungen 1, 2 zueinander.

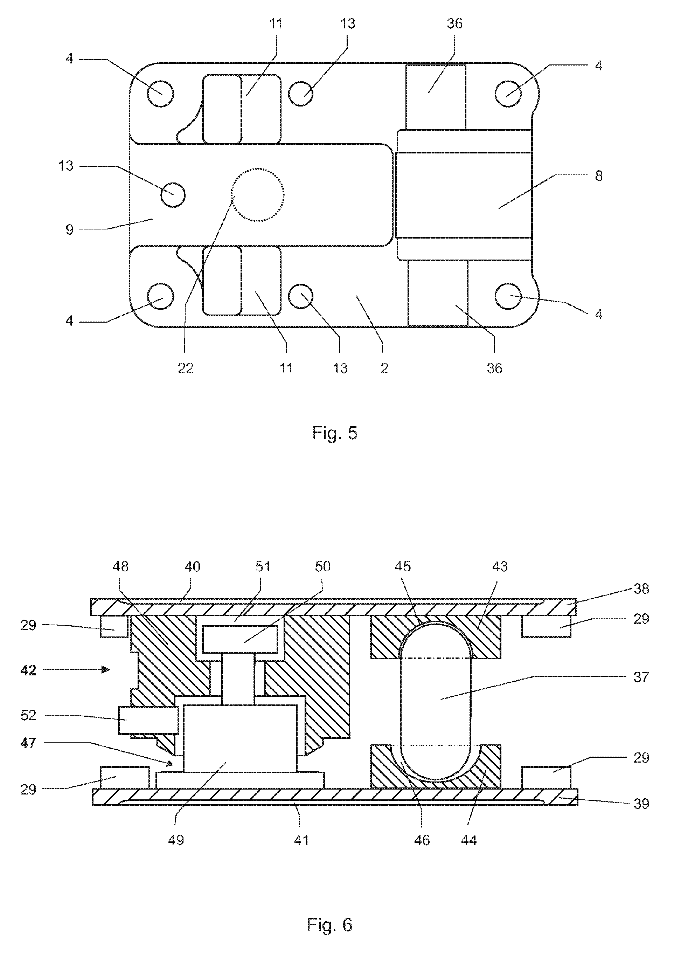

Neben den Durchführungen 4 zur Befestigung des Wägemoduls an einer tragenden Struktur weist die zweite Montageeinrichtung 2 noch drei weitere Durchführungen 13 auf, von denen in dieser Ansicht nur eine zu sehen ist. Diese Durchführungen 13 können vertikale Begrenzungsmittel aufnehmen, welche mit den in Bezug auf die Zeichnung direkt darüber angeordneten Haken 10 und der Überlastsicherung 12 zusammenwirken können. Die Anordnung und Funktion der vertikalen Begrenzungsmittel wird im Zusammenhang mit den Figuren 2 und 5 näher erläutert.

Zur Wägung eines Behälters mit einem Rührwerk oder unter schwierigen Aussenbedingungen kann an das Wägemodul ein bekannter Querlenker zur Kompensation auftretender Drehmomente und Seitenlasten angebracht werden. Zur Befestigung eines Querlenkers weist die zweite Montageeinrichtung 2 einen Befestigungsblock 14 auf und die erste Montageeinrichtung 1 weist mindestens eine Befestigungseinrichtung auf, welche hier in Form zweier Bohrungen 15 ausgestaltet ist.

In Figur 2 ist eine vereinfachte Seitenansicht A des Wägemoduls aus Figur 1 dargestellt. In dieser Ansicht ist gut zu erkennen, dass sowohl die erste Montageeinrichtung 1, als auch die zweite Montageeinrichtung 2 an ihren der Wägezelle 3 abgewandten Seiten jeweils eine Vertiefung 5, 16 aufweisen, welche zur thermischen Isolation des Wägemoduls gegenüber der Last und/oder der tragenden Struktur dienen.

Die mit der ersten Montageeinrichtung 1 verbundenen Haken 10 und auch die Überlastsicherung 12 weisen an ihrem freien Ende jeweils eine Aussparung 17 auf, welche mit vertikalen Begrenzungsmitteln 18 zusammenwirken können, die in der zweiten Montageeinrichtung 2 angeordnet sind. Die Dimension der Aussparung 17 ist an die des vertikalen Begrenzungsmittels 18 angepasst.

Jeweils ein vertikales Begrenzungsmittel 18 ist unterhalb der Haken 10 und der Überlastsicherung 12 in der zweiten Montageinrichtung angeordnet. Ein vertikales Begrenzungsmittel 18 besteht aus drei funktionellen Teilen, einer Verankerung 19, welche im Wesentlichen in der zweiten Montageeinrichtung 2 angeordnet ist, einem Kopf 20 mit einem im Vergleich zur Verankerung 19 vergrösserten Querschnitt und einem der ersten Montageeinrichtung 1 zugewandten Anschlag 21. Als Begrenzungsmittel 18 kann beispielsweise eine Schraube mit Kopf oder auch eine Gewindestange mit passender Mutter eingesetzt werden. Vorzugsweise sind die Begrenzungsmittel 18 einstellbar ausgestaltet, so dass die Höhe des aus der zweiten Montageeinrichtung 2 herausragenden Teils der Begrenzungsmittel 18 verändert und das vertikale Spiel der beiden Montageeinrichtungen zueinander eingestellt werden kann.

Die Begrenzungsmittel 18 dienen nicht nur als Anschlag für die Überlastsicherung 12 und die Haken 10, sondern können mit diesen zusammenwirken und so beispielsweise eine Grundstellung des Wägemoduls definieren und/oder sogar fixieren, wenn das Spiel zwischen den beiden Montageeinrichtungen 1, 2 mittels der einstellbaren Befestigungsmittel 18 aufgehoben wird.

Zwischen den Haken-Paaren 10, 11 und der Überlastsicherung 12 ist das mit der Wägezelle 3 zusammenwirkende Kraftübertragungselement 22 angeordnet, welches zwischen der zweiten Montageeinrichtung 2 und der Wägezelle 3 angeordnet ist. Das Kraftübertragungselement 22 kann sowohl ein beliebiger bekannter Lastaufnehmer sein, aber auch, wie hier gezeigt, ein in zwei Aufnahmeschalen 23, 24 beweglich gelagertes kugelförmiges Element sein. Ein Kraftkontakt zwischen den beiden Montageeinrichtungen 1, 2 wird nur über die Wägezelle 3 und das in den Aufnahmeschalen 23, 24 bewegliche Kraftübertragungselement 22 hergestellt.

Die Aufnahmeschale 23 ist mit der ersten Montageeinrichtung 1 verbunden und die Aufnahmeschale 24 mit der Wägezelle 3. Die Aufnahmeschalen 23, 24 weisen jeweils eine konkave Mulde 25, 26 auf, welche einen kreisförmigen oder elliptischen Querschnitt haben kann. In diesem Ausführungsbeispiel weist die Aufnahmeschale 23 eine konkave Mulde 25 mit elliptischem Querschnitt auf, wobei die Längsachse der Mulde 25 senkrecht zur Zeichnungsebene verläuft. Die Aufnahmeschale 23 ist in der Bohrung 7 in der ersten Montageeinrichtung arretierbar. Vorzugsweise ist die Bohrung 7 und auch das mit dieser zusammenwirkende Ende der Aufnahmeschale 23 vieleckig, insbesondere symmetrisch, also beispielsweise quadratisch oder als gleichseitiges Sechseck ausgestaltet, so dass die Aufnahmeschale 23 in mehreren fest vorgegebenen Positionen angeordnet und fixiert werden kann, wodurch wiederum die Auslenkungsrichtung des Kraftübertragungselements 22 vorgeben werden kann, wenn die drehbare Aufnahmeschale eine elliptische Mulde 25 aufweist.

Die andere Aufnahmeschale 24 kann fest und/oder in mehreren Winkeln arretierbar mit der zweiten Montageeinrichtung 2 verbunden sein oder die Aufnahmeschale 24 kann zur Verringerung der Gesamthöhe des Wägemoduls an der Wägezelle 3 ausgestaltet und/oder in diese integriert sein. In Figur 2 ist die konkave Mulde 26 in der Aufnahmeschale 24 kreisförmig ausgestaltet. Aufgrund der unterschiedlichen Geometrien der Aufnahmeschalen 23, 24, genauer der elliptischen Mulde 25 und der kreisförmigen Mulde 26, wird die Bewegung des kugelförmigen Kraftübertragungselements 22 eingeschränkt und seine Auslenkung auf eine bevorzugte Richtung, insbesondere entlang der Längsachse der elliptischen Mulde 25 gelenkt.

Zur Einstellung und/oder Begrenzung des horizontalen Spiels der beiden Montageeinrichtungen 1, 2 zueinander, weisen die Haken 10, 11 sowie die Überlastsicherung 12 feste horizontale Begrenzungsmittel 31 und/oder einstellbare horizontale Begrenzungsmittel 32 auf. Die festen Begrenzungsmittel 31 sind hier einfache Anschläge, welche direkt als Teil des Hakens 10 ausgestaltet sind. Ein einstellbares Begrenzungsmittel 32 kann beispielsweise ein Madenschraube oder eine Gewindestange sein, welche in einer senkrecht zur Lastrichtung angeordneten Durchführung 33 geführt wird. Die Haken 10, 11 sowie die Überlastsicherung 12 können mit festen 31 und/oder mit einstellbaren 32 horizontale Begrenzungsmitteln ausgestaltet sein, wobei einstellbare Begrenzungsmittel 32 die Anpassung des Wägemoduls an unterschiedliche Aussenbedingungen erlauben.

Weiterhin sind in Figur 2 die kanalförmige Einbauhilfe 9 und eine Drainage zu erkennen, welche in der der Wägezelle 3 zugewandten Fläche 27 der zweiten Montageeinrichtung 2 ausgestaltet ist. Die Fläche 27 fällt in Bezug auf die Zeichnung nach aussen ab, so dass auf die zweite Montageinrichtung 2 auftreffende Feuchtigkeit und/oder Flüssigkeiten rasch abgeleitet werden. Eine vergleichbare Funktion erfüllt auch die Einbauhilfe 9.

Figur 3 zeigt eine vereinfachte Seitenansicht einer ersten Montageeinrichtung 1 in einer Ausrichtung welche der Ansicht aus Richtung B aus Figur 1 entspricht. An der ersten Montageeinrichtung 1 sind zwei Haken 10, von denen in dieser Ansicht nur einer zu sehen ist, die Überlastsicherung 12 mit einem festen horizontalen Begrenzungsmittel 31 und eine Aufnahmeschale 23 mit einer konkaven, elliptischen Mulde 25 angeordnet. Die im Betrieb von der Wägezelle abgewandte Seite der Montageeinrichtung 1 weist eine flächige Vertiefung 5 auf, welche zur thermischen Isolation des Wägemoduls dient. Die Vertiefung 5 wird durch einen umlaufenden Materialsteg 6 begrenzt, dessen Oberfläche eine Kontaktfläche für eine Befestigungseinrichtung 28 darstellt.

Die Befestigungseinrichtung 28 kann beispielsweise ein Flansch sein, dessen Dimensionen an die der Montageeinrichtung 1 angepasst sind. Die Befestigungseinrichtung 28 schliesst die Vertiefung 5 bezogen auf die Zeichnung nach oben unter Ausbildung eines abgeschlossenen Hohlraums ab. Dieser Hohlraum kann beispielsweise luftleer sein, also ein Vakuum aufweisen, oder ein stehendes Luftpolster aufweisen oder auch mit einem Material definierter Wärmeleitfähigkeit gefüllt sein, wobei ein stehendes Luftpolster bevorzugt wird.

Die Befestigungseinrichtung 28 ist durch geeignete Befestigungsmittel 29 mit der ersten Montageeinrichtung 1 verbunden, vorzugsweise werden vier Befestigungsmittel 29 verwendet, welche jeweils an einer Ecke der Montageeinrichtung 1 angeordnet sind (s. a. Figur 1). Diese Mittel können wie hier gezeigt Gewindeschrauben und eine Mutter, aber auch Gewindestangen mit zwei Muttern oder andere zur Befestigung von Flanschen bekannte Mittel umfassen. Die Befestigungseinrichtung 28 ist wiederum mit einer Last 30 verbunden, welche hier als Fuss eines zu wägenden Behälters dargestellt ist.

Figur 4 zeigt eine vereinfachte Seitenansicht einer zweiten Montageeinrichtung 2 in der Ansicht aus Richtung B (s. Figur 1). Zur besseren Übersicht sind in dieser Ansicht die vertikalen Begrenzungsmittel (s. Figur 2) nicht gezeigt.

Die zweite Montageeinrichtung 2 weist zwei Haken 11 auf, von denen hier nur einer zu sehen ist, einen Befestigungsblock 14 für einen Querlenker, einen Sockel 8 zur Befestigung einer balkenförmigen Wägezelle 3 und einer vom Sockel 8 in Bezug auf die Zeichnung nach links abfallend ausgestaltete, kanalförmige Einbauhilfe 9. Die der Wägezelle zugewandte Oberfläche 27 der zweiten Montageeinrichtung 2 ist zu allen Seiten abfallend ausgestaltet. Die Wägezelle 3 ist mit einer Aufnahmeschale 24 mit einer kreisförmigen, konkaven Mulde 26 verbunden, welche ein kugelförmiges Kraftübertragungselement 22 aufnehmen kann.

Im Betrieb wird die zweite Montageeinrichtung 2 mit einer tragende Struktur 34 verbunden, welche als Befestigungseinrichtung 35 vorzugsweise einen Flansch aufweist. Die Montageeinrichtung 2 wird durch geeignete Befestigungsmittel 29 mit der Befestigungseinrichtung 35 verbunden. Die zweite Montageeinrichtung 2 kann ebenso wie die erste Montageeinrichtung mit oder wie hier für die zweite Montageeinrichtung 2 gezeigt ohne Mittel zur thermischen Isolation ausgestaltet sein.

Figur 5 zeigt eine vereinfachte Aufsicht auf eine zweite Montageeinrichtung 2 ohne Wägezelle, welche zusätzlich seitliche Anschläge 36 aufweist. Die seitlichen Anschlägen 36 sind neben dem Sockel 8 zur Befestigung einer hier nicht dargestellten balkenförmigen Wägezelle angeordnet und begrenzen nochmals die seitliche Auslenkung der Wägezelle. Das auslenkbare Ende der Wägezelle ist zwischen den Haken 11 angeordnet, wie es durch die Position des Kraftübertragungselements 22 angedeutet wird. In dieser Ausführungsform kann ein bekannter Querlenker direkt an einem seitlichen Anschlag 36 befestigt werden.

Die zweite Montageeinrichtung 2 hat eine im Wesentlichen rechteckige Form, wobei an allen vier Ecken Durchführungen 4 für Befestigungsmittel zur Befestigung der zweiten Montageeinrichtung 2 an einer tragenden Struktur oder einer Last vorgesehen sind.

Für vertikale Begrenzungsmittel (s. Figur 2) weist die zweite Montageeinrichtung 2 drei Durchführungen oder Bohrungen 13 auf. Die Bohrungen 13 sind an den Ecken eines Dreiecks angeordnet, dessen Mitte in etwa durch die Position des Kraftübertragungselements 22 bestimmt wird. Die Position der Bohrungen 13 stimmt in etwa mit der Position der Haken und der Überlastsicherung im aufgestellten Wägemodul überein. Zwei Bohrungen 13 sind neben einem Haken 11 und zwischen dem Haken 11 und einem seitlichen Anschlag 36 angeordnet, die dritte Bohrung 13 ist im Kanal 9 an der dem Sockel 8 gegenüberliegenden Seite der ersten Montageeinrichtung 2 angeordnet.

Figur 6 zeigt eine weitere Ausführungsform eines erfindungsgemässen Wägemoduls mit einer Rocker-Pin-Wägezelle 37 oder einem entsprechenden Wägezellen-Dummy als vereinfachte Seitenansicht. Die Wägezelle 37 ist zwischen zwei Montageeinrichtungen 38, 39 angeordnet. Eine Rocker-Pin-Wägezelle 37 hat keine bevorzugte Einbaurichtung, so dass im Betrieb eine Montageeinrichtung 38, 39 in Kraftkontakt mit der zu bestimmenden Last steht und/oder mit der tragenden Struktur verbunden ist. Beide Montageeinrichtungen 38, 39 weisen an ihrer der Wägezelle 37 abgewandte Seite eine flächige Vertiefung 40, 41 als Mittel zur thermischen Isolation auf. Zum Schutz des Wägemoduls ist zwischen den Montageeinrichtungen 38, 39 eine mehrteilige Abhebesicherung 42 angeordnet.

Bei einer optimalen Ausrichtung und Einstellung des Wägemoduls stehen die beiden Montageeinrichtung 38, 39 nur über die Wägezelle 37 miteinander in Kontakt. Die Wägezelle 37 ist in zwei Aufnahmeschalen 43, 44 gelagert, die jeweils mit einer der beiden Montageeinrichtungen 38, 39 verbunden sind. Die Aufnahmeschalen 43, 44 weisen beiden eine konkave Mulde 45, 46, welche entweder einen kreisförmigen oder einen elliptischen Querschnitt aufweisen können. Im hier gezeigten Ausführungsbeispiel hat die Mulde 45 einen elliptischen Querschnitt und die Mulde 46 einen kreisförmigen Querschnitt. Je nach Ausgestaltung der Aufnahmeschalen 45, 46 kann eine bevorzugte Auslenkungsrichtung der Rocker-Pin-Wägezelle 39 festgelegt werden.

Die Dimensionen des Wägemoduls können an die gewünschte Wägezelle 37 angepasst werden, wobei Wägezellen 37 mit unterschiedlichen Messbereichen verwendet werden können, also Hochlastwägezellen ebenso wie Präzisionswägezellen.

Die Abhebesicherung 42 besteht aus einem mit der Montageeinrichtung 39 verbundenen mehrteiligen Abhebelement 47 und einem mit der anderen Montageeinrichtung 38 verbundenen Führungselement 48, in dem das mehrteilige Abhebelement 47 geführt wird. Das mehrteilige Abhebelement 47 weist einen Sockel 49 und einen mit diesem Sockel 49 lösbar verbundenen Sicherungsstift 50 auf. Das mit dem Sockel 49 verbundene Ende des Sicherungsstifts 50 hat einen geringeren Durchmesser, als das frei, gegen die Montageeinrichtung 38 gerichtete Ende. Bei einem gut eingestellten Wägemodul wird das mehrteilige Abhebelement 47 kontaktfrei im Führungselement 48 geführt. Vorzugsweise steht die Last, beispielsweise ein zu wägender Behälter, in Kontakt mit der Montageeinrichtung 39 und die Montageeinrichtung 38 in Kontakt mit der tragenden Konstruktion, wobei es auch möglich ist, das Wägemodul mit entgegengesetzter Orientierung einzubauen.

Die beiden Montageeinrichtungen 38, 39 sind vorzugsweise plattenartig ausgebildet und können an die Form des zu wägenden Behälters und/oder der tragenden Struktur angepasst werden. Für die Montage des Wägemoduls am Behälter und/oder an der tragenden Struktur weisen beide Montageeinrichtungen 38, 39 mehrere geeignete Befestigungsmittel 29 auf.

Der Sicherungsstift 50 ist berührungsfrei in einer Aussparung 51 im Führungselement 48 angeordnet und dient dazu, ein Auseinanderfallen des Wägemoduls zu verhindern.

Die Aussparung 51 im Führungselement 48 ist so gestaltet, dass das mehrteilige Abhebelement 47 darin berührungsfrei geführt wird und mit einem gewissen Abstand zur Montageeinrichtung 38 angeordnet ist, wenn das Wägemodul optimal ausgerichtet ist. Das Führungselement 48 stellt somit eine Art Hülse zur Aufnahme des mehrteiligen Abhebelements 47 dar, wobei die Form der Aussparung 51 im Wesentlichen der Form des mehrteiligen Abhebelements 47 entspricht.

Wirken Störkräfte auf das Wägemodul ein, so wird entweder die Montageeinrichtung 38 mit dem Sicherungsstift 50 in Kontakt gebracht oder bei seitlich einwirkenden Störkräften werden Teile des Abhebelements 47 innen in Kontakt mit dem Führungselement 48 gebracht. Das Führungselement 48 wirkt somit sowohl als horizontales als auch als vertikales Begrenzungsmittel und der Sicherungsstift 50 stellt eine Art Überlastsicherung dar. Zur Feinabstimmung des Abstands zwischen dem Abhebelement 47 und dem Führungselement 48 können im Führungselement 48 mehrere Begrenzungsmittel 52 angeordnet werden, welche den Abstand zwischen dem Abhebelementen 47 und dem Führungselement 48 begrenzen. Vorzugsweise sind solche Begrenzungsmittel 52 und damit das Spiel einstellbar.

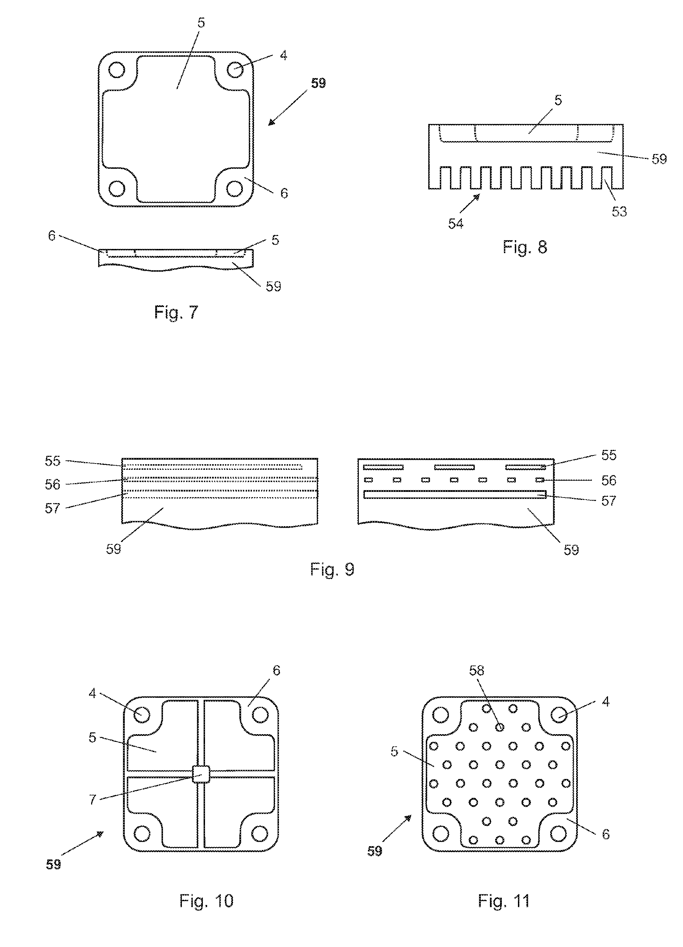

Die Figuren 7 bis 11 zeigen verschiedene Ausgestaltungsmöglichkeiten eines Mittels zur thermischen Isolation. In den Figuren 7, 10 und 11 werden schematische Aufsichten auf eine und in den Figuren 7 bis 9 Seitenansichten von einer Montageeinrichtung mit einem Mittel zur thermischen Isolation gezeigt.

Figur 7 zeigt eine Montageeinrichtung 59 in einer Aufsicht und einer Seitenansicht mit einer flächigen Vertiefung 5, wie sie bereits in Figur 1 gezeigt wurde. Die Vertiefung 5 an der Montageeinrichtung 59 wird durch Materialstege 6 begrenzt und die Montageeinrichtung 59 weist an den Ecken die Durchführungen 4 für Befestigungsmittel auf.

Figur 8 zeigt eine Seitenansicht einer Montageeinheit 59 mit einer Vertiefung 5 auf der im Betrieb von der Wägezelle abgewandten Seite und mehreren Aussparungen 53 auf der gegenüberliegenden Seite. Die Aussparungen 53 sind so angeordnet, dass sie eine Art Kühlrippe 54 ausbilden, wodurch eine zusätzliche Wärmeabfuhr durch vorbei strömende Luft ermöglicht wird.

Figur 9 zeigt zwei Seitenansichten einer Montageeinrichtung , welche anstelle einer Vertiefung in der der Wägezelle abgewandten Oberfläche, eine oder wie hier gezeigt mehrere Durchführungen 55, 56, 57 aufweist, welche senkrecht zur Lastrichtung in der Montageeinrichtung ausgebildet sind. Die Durchführungen können entweder zur Umgebung hin offen oder geschlossen sein und gegebenenfalls mit einem Material mit einer vorgegebenen Wärmeleitfähigkeit verfüllt sein. Die Durchführungen 55 haben nur eine Öffnung zur Umgebung. Die Durchführungen 55 sind so dimensioniert, dass mehrere in einer Ebene nebeneinander angeordnet werden können. Vergleichbar sind die Durchführungen 56, welche kleiner sind als die Durchführungen 55 und durch die Montageeinrichtung hindurch reichen. Die Durchführung 57 ist als Hohlraum ausgebildet, der sich nahezu durch die ganze Montageeinrichtung hindurch zieht.

Prinzipiell können die Durchführungen auch in Lastrichtung ausgebildet sein, so dass das Mittel zur thermischen Isolation als eine Art Gitter an der Montageeinrichtung ausgestaltet ist.

Figur 10 zeigt eine Aufsicht auf eine Montageeinrichtung 59 mit mehreren durch Materialstege 6 von einander getrennten Vertiefungen 5. Etwa mittig auf der Montageeinrichtung ist in dieser Ansicht die Durchführung 7 zur Befestigung einer Aufnahmeschale zu sehen (s. a. Figur 1).

Figur 11 zeigt ebenfalls eine Aufsicht auf eine Montageeinrichtung 59 mit einer flächigen Vertiefung 5 und einer Vielzahl von Abstützungen 58. Diese Ausführungsform ist besonders vorteilhaft bei Anwendungen im Schwerlastbereich, da sowohl eine hohe strukturelle Stabilität als auch eine thermische Isolation des Wägemoduls gewährleistet werden kann.

Die in den Figuren 7 bis 11 gezeigten Ausführungsformen von Mitteln zur thermischen Isolation können prinzipiell bei allen Wägemodulen eingesetzt werden, welche eine Wägezelle und eine oder zwei Montageeinrichtungen aufweisen. Die gezeigten Mittel können in einem Wägemodul beliebig kombiniert werden und sowohl in einer mit einer Last in Kontakt stehende sowie in einer mit einer tragenden Struktur verbundene Montageeinrichtung ausgestaltet werden.

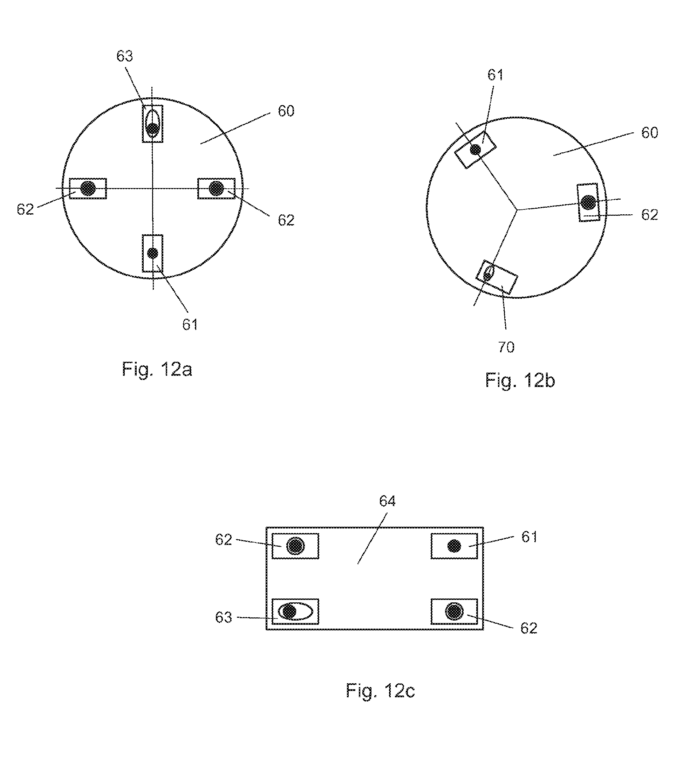

Ein Wägemodulanordnung zur Wägung eines grossvolumigen Behälters umfasst in der Regel mindestens drei Wägemodule, von denen eines nahezu spielfrei eingestellt ist und die anderen ein vorgegebenes Spiel haben. Die Wägemodule werden in Abhängigkeit der Form des Behälters, insbesondere der Form seiner Grundfläche, zu einander ausgerichtet. Die Ausrichtung der einzelnen Wägemodule zueinander wird so gewählt, dass weder einwirkende Störkräfte noch eine thermische Ausdehnung oder Kontraktion des Behälters das Wägeergebnis beeinflussen. Die Figuren 12a bis 12c stellen Beispiele für unterschiedliche Wägemodulanordnungen dar.

Figur 12a zeigt einen Behälter 60 mit einer runden Grundfläche und einer mit dem Behälter 60 fest verbundenen Wägemodulanordnung. Die Wägemodulanordnung umfasst vier radial ausgerichtete Wägemodule 61, 62, 63, welche am Rand des Behälters 60 jeweils um 90° versetzt zueinander angeordnet sind. Die Längsachsen der im Wesentlichen rechteckigen Wägemodule 61, 62, 63 sind radial in Bezug auf die Grundfläche des Behälters 60 ausgerichtet. Ein Wägemodul 61 ist nahezu spielfrei eingestellt und dient als Fixpunkt. Diesem Wägemodul 61 gegenüber ist ein in einer Richtung eingeschränkt bewegliches Wägemodul 63 angeordnet. Die beiden letzten Positionen werden von zwei voll beweglichen Wägemodulen 62 eingenommen.

Aufgrund der Ausgestaltung der in den Figuren 1 bis 11 gezeigten Wägemodule mit einem Kraftübertragungselement bzw. einer eine Wägezelle und ein Kraftübertragungselement umfassenden Einheit, welche zwischen zwei Aufnahmeschalen angeordnet ist, kann die Einstellung der Wägemodule 61, 62 und 63 durch Ausrichtung und/oder Ausgestaltung der Aufnahmeschalen festgelegt werden, indem entweder eine der Aufnahmeschalen in einer neuen Position festgestellt wird, wie es mittels der in Figuren 1 und 2 gezeigten Durchführung vorgesehen ist, oder durch einfachen Austausch einer der beiden Aufnahmeschalen gegen eine andere Aufnahmeschale. Beim Einsatz einer balkenartigen Wägezelle wird ein Austausch der mit einer Montageeinrichtung verbundenen Aufnahmeschale bevorzugt.

Ein spielfreies Wägemodul 61 wird realisiert, indem zwei Aufnahmeschalen mit elliptischen Mulden verwendet werden, die so angeordnet werden, dass ihre Längsachsen orthogonal zueinander stehen. Ein eingeschränkt bewegliches Wägemodul 63 weist vorzugsweise eine Aufnahmeschale mit einer kreisförmigen Mulde und eine Aufnahmeschale mit einer elliptischen Mulde auf, wobei durch Drehung der elliptischen Aufnahmeschale die bevorzugte Bewegungsrichtung beliebig verändert werden kann. Ein freibewegliches Wägemodul 62 umfasst zwei Aufnahmeschalen mit kreisförmigen Mulden.

Figur 12b zeigt ebenfalls einen Behälter 60 mit runder Grundfläche. Die mit dem Behälter 60 fest verbundene Wägemodulanordnung umfasst drei Wägemodule 61, 62, 70, welche am Rand des Behälters 60 tangential ausgerichtet sind. Die Anordnung wird von einem spielfreien Wägemodul 61, einem eingeschränkt beweglichen Wägemodul 70 und einem voll beweglichen Wägemodul 63 gebildet, welche in Bezug auf die Grundfläche des Behälters 60 in einem Abstand von ungefähr 120° zueinander angeordnet sind.

Figur 12c zeigt einen Behälter 64 mit einer eckigen Grundfläche. Er wird von vier Wägemodulen 61, 62, 63 getragen, welche an den vier Ecken des Behälters 64 angeordnet sind. Zwei freibewegliche Wägemodule 62 sind an diagonal gegenüberliegenden Ecken angeordnet und an den anderen beiden Ecken sind ein spielfreies Wägemodul 61 und ein eingeschränkt bewegliches Wägemodul 62 angeordnet.

Anhand der Figuren 12a bis 12c wird deutlich, dass die Wägemodule eine tragende Funktion haben und den Kontakt zwischen dem Behälter und der den Behälter tragenden Struktur herstellen. Eine Fehleinstellung der Wägemodule hat somit auch einen Einfluss auf die Standfestigkeit des Behälters, welche insbesondere bei aggressiven und/oder umweltschädlichen Inhalten ständig gewährleistet sein muss. Aus diesem Grund ist es notwendig, die Wägemodule möglichst stabil auszugestalten und sowohl gegen einwirkende, Überlasten, Störkräfte und/oder Drehmomente zu schützen.

Die Lenkung und Begrenzung der Bewegung des Kraftübertragungselements und damit des Spiels des einzelnen Wägemoduls ist vor allem vorteilhaft, wenn sich die Ausdehnung des zu wägenden Behälters oder der zu wägenden Last ändert, wie es beispielsweise aufgrund von Temperaturänderungen geschehen kann.

### Bezugszeichenliste

- 1: Montageeinrichtung
- 2: Montageeinrichtung
- 3: Wägezelle
- 4: Durchführung
- 5: Vertiefung in 1
- 6: Materialsteg
- 7: Durchführung
- 8: Sockel
- 9: Einbauhilfe
- 10: Haken
- 11: Haken
- 12: Überlastsicherung
- 13: Durchführung
- 14: Befestigungsblock
- 15: Bohrung
- 16: Vertiefung in 2
- 17: Aussparung
- 18: vertikales Begrenzungsmittel
- 19: Verankerung
- 20: Kopf
- 21: Anschlag
- 22: Kraftübertragungselement
- 23: Aufnahmeschale
- 24: Aufnahmeschale
- 25: konkave Mulde in 23
- 26: konkave Mulde in 24
- 27: Oberfläche von 2
- 28: Befestigungsmittel
- 29: Befestigungsmittel
- 30: Last
- 31: festes horizontales Begrenzungsmittel
- 32: einstellbares horizontales Begrenzungsmittel
- 33: Durchführung
- 34: tragende Struktur
- 35: Befestigungseinrichtung
- 36: seitlicher Anschlag
- 37: Wägezelle
- 38: Montageeinrichtung
- 39: Montageeinrichtung
- 40: Vertiefung in 38
- 41: Vertiefung in 39
- 42: Abhebsicherung
- 43: Aufnahmeschale
- 44: Aufnahmeschale
- 45: konkave Mulde in 43
- 46: konkave Mulde in 44
- 47: Abhebelement
- 48: Führungselement
- 49: Sockel
- 50: Sicherungsstift
- 51: Aussparung
- 52: Begrenzungsmittel
- 53: Aussparung
- 54: Kühlrippe
- 55: Durchführung
- 56: Durchführung
- 57: Durchführung
- 58: Abstützung

- 59: Montageeinrichtung
- 60: Behälter
- 61: spielfreies Wägemodul
- 62: voll bewegliches Wägemodul
- 63: eingeschränkt bewegliches Wägemodul
- 64: Behälter
- 70: eingeschränkt bewegliches Wägemodul

## Patentansprüche

1. Wägemodul mit einer ersten Montageinrichtung (1), welche in Kraftkontakt mit einer zu bestimmenden Last (30) steht, einer zweiten Montageinrichtung (2), welche mit einer das Wägemodul tragenden Struktur (34) verbindbar ist, und einer zwischen den Montageeinrichtungen (1, 2) angeordneten Wägezelle, **dadurch gekennzeichnet, dass** mindestens eine Montageinrichtung (1, 2) derart ausgestaltet ist, dass sie ein Mittel zur thermischen Isolation darstellt, welches die Wägezelle (3) gegenüber der Last (30) und/oder der tragenden Struktur (34) thermisch isoliert.

2. Wägemodul nach Anspruch 1, **dadurch gekennzeichnet, dass** das Mittel zur thermischen Isolation in Form mindestens einer flächigen Vertiefung (5) in der Kontaktfläche der Montageinrichtung (1, 2) zur Last (30) oder zur tragenden Struktur (34) ausgestaltet ist.

3. Wägemodul nach Anspruch 1, **dadurch gekennzeichnet, dass** das Mittel zur thermischen Isolation in Form mindestens einer vertikal zur Lastrichtung angeordneten Durchführung (55, 56, 57) in einer Montageeinrichtung (59) ausgestaltet ist

4. Wägemodul nach einem der Ansprüche 1 bis 3, **dadurch gekennzeichnet, dass** das Wägemodul mindestens eine Drainage aufweist.

5. Wägemodul nach einem der Ansprüche 1 bis 4, **dadurch gekennzeichnet, dass** eine Montageeinrichtung (2) eine Einbauhilfe (9) für die Wägezelle (3) aufweist, welche insbesondere kanalförmig ausgebildet ist.

6. Wägemodul nach einem der Ansprüche 1 bis 5, **dadurch gekennzeichnet, dass** die Wägezelle (3) mit einem kugelförmigen Kraftübertragungselement (22) zusammenwirkt.

7. Wägemodul nach Anspruch 6, **dadurch gekennzeichnet, dass** das Wägemodul seitliche Anschläge (36) zur Stabilisierung der Wägezelle (3) aufweist.

8. Wägemodul nach einem der Ansprüche 1 bis 5, **dadurch gekennzeichnet, dass** die Wägezelle und ein Kraftübertragungselement eine Einheit (37) bilden, welche zwei konvexe Zylinderendflächen mit gleicher oder unterschiedlicher Geometrie aufweist.

9. Wägemodulanordnung mit mindestens drei Wägemodulen (61, 62, 63) nach einem der Ansprüche 1 bis 8 zur Bestimmung der Masse und/oder einer von der Masse ableitbaren physikalischen Grösse einer Last, welche in Kraftkontakt mit der Wägemodulanordnung steht.
